# EUROPÄISCHE PATENTSCHRIFT

(11) **EP 3 197 739 B1**
(45) Veröffentlichungstag und Bekanntmachung des Hinweises auf die Patenterteilung: **27.10.2021**
(21) Anmeldenummer: 15739171.5
(22) Anmeldetag: 11.07.2015
(51) Int. Cl.: B60W 50/00, B60W 50/08, B60W 50/14, G05D 1/00

(54) **FUNKTIONSFREIGABE EINER HOCHAUTOMATISIERTEN FAHRFUNKTION**
ENABLING A HIGHLY AUTOMATED DRIVING FUNCTION
AUTORISATION D'UNE FONCTION DE ROULEMENT HAUTEMENT AUTOMATISÉE

(30) Priorität: 24.09.2014 DE 102014014120
(43) Veröffentlichungstag der Anmeldung: 02.08.2017
(73) Patentinhaber: Daimler AG, 70372 Stuttgart (DE)
(72) Erfinder: DESENS, Jens, 70569 Stuttgart (DE); HEIN, Martin, 75378 Bad Liebenzell (DE); JOOS, Armin, 70567 Stuttgart (DE); KOLBE, Uli, 70199 Stuttgart (DE); LAUX, Rainer, 70794 Filderstadt (DE); OLTMANN, Volker, 75365 Calw (DE)
(74) Vertreter: JENSEN & SON
(86) Internationale Anmeldenummer: PCT/EP2015/001423
(87) Internationale Veröffentlichungsnummer: WO 2016/045759

(56) Entgegenhaltungen:
- WO-A2-2013/034347
- DE-A1-102011 077 592
- DE-A1-102012 016 802
- DE-A1-102012 101 686
- US-B1- 8 825 261

## Beschreibung

Die Erfindung betrifft ein Verfahren zum autonomen Betreiben eines Fahrzeugs. Darüber hinaus betrifft die Erfindung ein Assistenzsystem zum autonomen Betreiben eines Fahrzeugs. Schließlich betrifft die Erfindung ein Fahrzeug mit einem ebensolchen Assistenzsystem.

Gattungsbildende Verfahren und Assistenzsysteme sind im Stand der Technik bekannt, beispielsweise aus der WO 2013/034347 A2. Ebenso offenbart die Druckschrift DE 10 2012 016 802 A1 ein Verfahren zur Steuerung eines Fahrzeugsystems, welches zum autonomen Betrieb eines Kraftfahrzeugs ausgebildet ist. Offenbarungsgemäß werden Ortsinformationen, die eine aktuelle Position des Kraftfahrzeugs beschreiben, sowie zumindest eine Erlaubnisinformation, welche ortsbezogen Informationen über eine Zulässigkeit des autonomen Betriebs des Kraftfahrzeugs enthält, zur Ermittlung einer Einstellinformation für das Fahrzeugsystem herangezogen. Zusätzlich wird wenigstens ein Betriebsparameter des Fahrzeugsystems in Abhängigkeit von der Einstellinformation gewählt. Offenkundig ist bei dem im Stand der Technik bekannten Verfahren die Einstellinformation für das Fahrzeugsystem nur von lokalen Ortsinformationen abhängig, welche jedoch nicht in einem für einen autonomen Fahrbetrieb eines Fahrzeugs notwendigen Maß detailliert sind. Insbesondere sind der dem Stand der Technik entsprechenden Druckschrift keine Informationen über infrastrukturelle Voraussetzungen für einen autonomen Fahrbetrieb eines Fahrzeugs entnehmbar.

Aufgabe der Erfindung ist es, ein verbessertes Verfahren zum autonomen Betreiben eines Fahrzeugs anzugeben.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe ist mit einem Verfahren zum autonomen Betreiben eines Fahrzeugs auf einer vorausliegenden Fahrstrecke dadurch gelöst, dass der autonome Betrieb des Fahrzeugs nur dann zugelassen wird, wenn für eine vorgegebene Streckenlänge der vorausliegenden Fahrstrecke wenigstens eine der folgenden Bedingungen erfüllt ist.

Als eine Bedingung wird vorgeschlagen, den autonomen Betrieb des Fahrzeugs nur dann zuzulassen, wenn auf mindestens einer Seite, vorzugsweise auf beiden Seiteneiner aktuellen Fahrbahn des Fahrzeugs eine bauliche Trennung, beispielsweise in Form von Leitplanken oder Leitmauern, vorhanden sind. Dieser Aspekt schränkt eine Verwendung des autonomen Betriebs des Fahrzeugs auf Autobahnen und zumeist mehrspurig ausgebaute Fernstraßen ein.

Als eine weitere bevorzugte Bedingung wird vorgeschlagen, den autonomen Betrieb des Fahrzeugs nur dann zuzulassen, wenn eine Fahrspur des Fahrzeugs eine Mindestspurbreite aufweist, wodurch sichergestellt ist, dass Mindestabstandstoleranzen zu benachbarten Fahrspuren auch bei einem autonomen Betrieb des Fahrzeugs einhaltbar sind.

Als eine weitere bevorzugte Bedingung wird vorgeschlagen, dass die Anzahl der Fahrspuren sich während des autonomen Betriebs nicht ändern darf. Auf diese Weise werden Gefahrenstellen wie lokale Spurzusammenführungen oder Baustellen gezielt von einem autonomen Betriebs des Fahrzeugs ausgenommen.

Als eine weitere Bedingung wird vorgeschlagen, dass für einen autonomen Betrieb des Fahrzeugs kein Tunnel vorhanden sein darf, da auch ein Tunnel eine lokale Gefahrenstelle darstellt und darüber hinaus nicht sämtliche für einen autonomen Betrieb des Fahrzeugs erforderlichen Systeme in einem Tunnel verfügbar sind, wobei dieser Aspekt besonders für telematikbasierte Systeme, insbesondere für Datenübertragungen zu Backend-Systemen, gilt.

Als eine weitere bevorzugte Bedingung wird vorgeschlagen, dass ein autonomer Betrieb des Fahrzeugs nur dann möglich sein soll, wenn kein Gebäude, wie beispielsweise eine Mautstelle, auf der Fahrbahn vorhanden ist, da auch diese infrastrukturellen Einrichtungen lokale Gefahrenstellen sind.

Als eine weitere bevorzugte Bedingung wird vorgeschlagen, dass ein autonomer Betrieb des Fahrzeugs unterbleiben muss, wenn ein Autobahnkreuz vorhanden ist, wobei bei diesem Gesichtspunkt wieder der Aspekt einer lokalen Gefahrenstelle, einhergehend mit einer Veränderung der Fahrspuranzahl, zum Tragen kommt.

Als eine weitere bevorzugte Bedingung wird vorgeschlagen, dass ein autonomer Betrieb des Fahrzeugs nur dann erfolgen, wenn ein Krümmungsradius der Fahrspur des Fahrzeugs größer als ein vorgegebener Grenzwert G1 ist, wodurch sichergestellt wird, dass bei einem autonomen Betrieb des Fahrzeugs keine zu großen Kurvenradien auftreten.

Als eine weitere Bedingung wird vorgeschlagen, dass ein autonomer Betrieb des Fahrtzeugs nur dann erfolgt, wenn die Fahrbahn keine Kuppen oder Senken aufweist, die die Reichweite von Umgebungserfassungssensoren, z.B. eines Kamera- oder Radarsystems, wesentlich einschränken, d.h. soweit einschränken, dass eine vorgegebene Mindestreichweite unterschritten wird.

Als eine weitere bevorzugte Bedingung wird vorgeschlagen, dass keine Verkehrsstörung bzw. keine Verkehrsmeldung über Gefahrensituationen vorliegen dürfen, da sich bei solchen Situationen ein verkehrsgerechtes Handeln oftmals nicht mit vordefinierbaren Routinen beschreiben lässt. Gerade Informationen zu Verkehrsstörungen bzw. Verkehrsmeldungen über Gefahrensituationen sind zur Entscheidungsfindung relevant, und werden bevorzugt über Telematikdienste an das jeweilige Fahrzeug übermittelbar.

Eine erste bevorzugte Ausführungsform des erfindungsgemäßen Verfahrens sieht vor, den autonomen Betrieb des Fahrzeugs an weitere Bedingungen zu knüpfen. Zunächst wird als Bedingung vorgeschlagen, dass ein autonomer Betrieb des Fahrzeugs nur dann möglich sein soll, wenn eine aktuelle Position des Fahrzeugs in dem Fahrzeug mit einer Positionsgenauigkeit ermittelt wird, die besser als ein vorgegebener Grenzwert G2 ist. Mit diesem Aspekt wird sichergestellt, dass eine zielgenaue Ortungsmöglichkeit des Fahrzeugs auf einer Fahrspur gegeben ist, die für einen autonomen Betrieb des Fahrzeugs zwingend erforderlich ist.

Weiter wird als Bedingung vorgeschlagen, dass ein autonomer Betrieb des Fahrzeugs nur dann erfolgen darf, wenn für die vorgegebene Streckenlänge der vorausliegenden Fahrstrecke digitale Kartendaten zum Fahrbahnverlauf vorliegen, welche eine Positionsgenauigkeit aufweisen, die besser als ein vorgegebener Grenzwert G3 ist, wodurch sichergestellt ist, dass bei Verwendung von digitalen Kartendaten zur Berechnung einer Fahrzeugtrajektorie entlang der vorgegebenen vorausliegenden Fahrstrecke hinreichend genaues Kartenmaterial vorliegt, welches insbesondere auch ein digitales Abbild der Fahrspuren der vorausliegenden Fahrstrecke umfasst.

Weiter wird als Bedingung vorgeschlagen, dass für einen autonomen Betrieb des Fahrzeugs eine Verbindung zu einem Server bestehen muss, über die für die vorausliegende Fahrstrecke des Fahrzeugs aktuelle Verkehrsinformationen, vorzugsweise Informationen über lokale Gefahrenstellen wie zum Beispiel Baustellen, bereitstellbar sind.

Weiter wird als Bedingung vorgeschlagen, dass alle Systeme des Fahrzeugs, die zum autonomen Betreiben des Fahrzeugs erforderlich sind, fehlerfrei arbeiten müssen. Hierfür kann vorzugsweise eine standardisierte Abfrage über eine Steuereinheit erfolgen, die auch zur Ausführung eines Verfahrens zum autonomen Betreiben des Fahrzeugs ausgebildet ist.

Weiter wird als Bedingung vorgeschlagen, dass für die vorausliegende Fahrstrecke Wetterbedingungen vorgegebenen Wettermindestbedingungen entsprechen müssen. Hierbei ist es vorzugsweise sinnvoll, solche Wettermindestbedingungen vorzugeben, die einen störungsfreien Betrieb der für den autonomen Betrieb des Fahrzeugs notwendigen Assistenzsysteme, insbesondere solcher Systeme, die als optische Assistenzsysteme ausgebildet sind, garantieren.

Schließlich wird als Bedingung für einen autonomen Betrieb des Fahrzeugs vorgeschlagen, dass für die vorausliegende Fahrstrecke Oberflächenbedingungen vorliegen müssen, welche vorgegeben Oberflächenmindestbedingungen entsprechen. Auf diese Weise lässt sich sicherstellen, dass bei verminderten Oberflächenreibwerten µ_{low} oder sich plötzlich ändernden Oberflächenreibwerten µⱼᵤₘₚ, wie sie vorzugsweise im Herbst bzw. Winter auftreten, kein autonomer Betrieb des Fahrzeugs möglich ist.

Eine weitere Ausführungsform des erfindungsgemäßen Verfahrens sieht vor, sofern der autonome Betrieb des Fahrzeugs zulässig ist, dies einem Fahrer des Fahrzeugs zu signalisieren. Die Signalisierung hierüber erfolgt bevorzugt visuell, beispielweise durch Darstellung einer entsprechenden Meldung in einem Kombiinstrument und/oder in einem Zentraldisplay und/oder zusätzlich in einem Head-Up-Display, sowie akustisch, vorzugsweise durch Ausgabe eines entsprechenden Signaltons und/oder einer gesprochenen Wortmeldung.

Darüber hinaus wird vorgeschlagen, dass die vorgegebene Streckenlänge aus einem Bereich [1 km, ..., 2 km, ..., 3 km, ..., 4 km, ..., 5 km, ..., 10 km, ..., 20 km] gewählt wird. Sofern die entsprechenden Bedingungen für dieses Streckenlänge vorliegen, ist ein autonomer Betrieb des Fahrzeugs möglich.

Ein Weiterbildung des Verfahrens zeichnet sich dadurch aus, dass die digitalen Kartendaten mehrere Layer umfassen, wobei einer der Layer Daten zu Spurverläufen der einzelnen Fahrspuren der Fahrbahn beinhaltet, und ein weiterer Layer Daten zu Objekten beinhaltet, die entlang den Fahrspuren angeordnet sind. Der Begriff "Layer" wird vorliegend als eine Datenebene bzw. als ein separiertes bzw. einzeln adressierbares Datenvolumen verstanden. Entsprechende Objekte sind beispielsweise Brücken, Tunnels, Mautstellen, Kreuzungen und Haltestationen. Durch eine entsprechende Layer-Struktur ist sichergestellt, dass das digitale Kartenmaterial hinreichend genaue Informationen bereitstellt, auf deren Basis eine Entscheidung über eine Möglichkeit für einen autonomen Betrieb des Fahrzeugs auf gesicherter Informationsbasis herbeiführbar ist.

Weiter ist die Aufgabe mit einem Assistenzsystem zum autonomen Betreiben eines Fahrzeugs auf einer vorausliegenden Fahrstrecke dadurch gelöst, dass eine Steuereinheit vorhanden ist, die den autonomen Betrieb des Fahrzeugs nur dann zulässt, wenn für eine vorgegebene Streckenlänge der vorausliegenden Fahrstrecke wenigstens eine der folgenden Bedingungen erfüllt ist.

Als eine Bedingung wird vorgeschlagen, den autonomen Betrieb des Fahrzeugs nur dann zuzulassen, wenn auf einer, vorzugsweise auf beiden Seiten einer aktuellen Fahrbahn des Fahrzeugs eine bauliche Trennung vorhanden sind, beispielsweise eine Leitplanke oder eine Leitmauer. Dieser Aspekt schränkt eine Verwendung des autonomen Betriebs des Fahrzeugs auf Autobahnen und zumeist mehrspurig ausgebaute Fernstraßen ein.

Als eine weitere bevorzugte Bedingung wird vorgeschlagen, den autonomen Betrieb des Fahrzeugs nur dann zuzulassen, wenn eine Fahrspur des Fahrzeugs eine Mindestspurbreite aufweist, wodurch sichergestellt ist, dass Mindestabstandstoleranzen zu benachbarten Fahrspuren auch bei einem autonomen Betrieb des Fahrzeugs einhaltbar sind.

Als eine weitere Z bevorzugte Bedingung wird vorgeschlagen, dass die Anzahl der Fahrspuren sich während des autonomen Betriebs nicht ändern darf. Auf diese Weise werden Gefahrenstellen wie lokale Spurzusammenführungen oder Baustellen gezielt von einem autonomen Betriebs des Fahrzeugs ausgenommen.

Als eine weitere Bedingung wird vorgeschlagen, dass für einen autonomen Betrieb des Fahrzeugs kein Tunnel vorhanden sein darf, da auch ein Tunnel eine lokale Gefahrenstelle darstellt und darüber hinaus nicht sämtliche für einen autonomen Betrieb des Fahrzeugs erforderlichen Systeme in einem Tunnel verfügbar sind, wobei dieser Aspekt besonders für telematikbasierte Systeme, insbesondere für Datenübertragungen zu Backend-Systemen, gilt.

Als eine weitere bevorzugte Bedingung wird vorgeschlagen, dass ein autonomer Betrieb des Fahrzeugs nur dann möglich sein soll, wenn kein Gebäude, wie beispielsweise eine Mautstelle, auf der Fahrbahn vorhanden ist, da auch diese infrastrukturellen Einrichtungen lokale Gefahrenstellen sind.

Als eine weitere bevorzugte Bedingung wird vorgeschlagen, dass ein autonomer Betrieb des Fahrzeugs unterbleiben muss, wenn ein Autobahnkreuz vorhanden ist, wobei bei diesem Gesichtspunkt wieder der Aspekt einer lokalen Gefahrenstelle, einhergehend mit einer Veränderung der Fahrspuranzahl, zum Tragen kommt.

Als eine weitere Z bevorzugte Bedingung wird vorgeschlagen, dass ein autonomer Betrieb des Fahrzeugs nur dann erfolgen, wenn ein Krümmungsradius der Fahrspur des Fahrzeugs größer als ein vorgegebener Grenzwert G1 ist, wodurch sichergestellt wird, dass bei einem autonomen Betrieb des Fahrzeugs keine zu großen Kurvenradien auftreten.

Als eine weitere Z bevorzugte Bedingung wird vorgeschlagen, dass keine Verkehrsstörung bzw. keine Verkehrsmeldung über Gefahrensituationen vorliegen dürfen, da sich bei solchen Situationen ein verkehrsgerechtes Handeln oftmals nicht mit vordefinierbaren Routinen beschreiben lässt. Gerade Informationen zu Verkehrsstörungen bzw. Verkehrsmeldungen über Gefahrensituationen sind zur Entscheidungsfindung relevant, und werden bevorzugt über Telematikdienste an das jeweilige Fahrzeug übermittelbar.

Als eine weitere Bedingung wird vorgeschlagen, dass ein autonomer Betrieb des Fahrtzeugs nur dann erfolgt, wenn die Fahrbahn keine, die Reichweite von Umgebungserfassungssensoren wesentlich einschränkenden, Kuppen oder Senken aufweist.

Eine bevorzugte Ausführungsform des erfindungsgemäßen Assistenzsystems sieht vor, dass die Steuereinheit den autonomen Betrieb des Fahrzeugs an weitere Bedingungen knüpft.

Zunächst wird als Bedingung vorgeschlagen, dass ein autonomer Betrieb des Fahrzeugs nur dann möglich sein soll, wenn eine aktuelle Position des Fahrzeugs in dem Fahrzeug mit einer Positionsgenauigkeit ermittelt wird, die besser als ein vorgegebener Grenzwert G2 ist. Mit diesem Aspekt wird sichergestellt, dass eine zielgenaue Ortungsmöglichkeit des Fahrzeugs auf einer Fahrspur gegeben ist, die für einen autonomen Betrieb des Fahrzeugs zwingend erforderlich ist.

Weiter wird als Bedingung vorgeschlagen, dass ein autonomer Betrieb des Fahrzeugs nur dann erfolgen darf, wenn für die vorgegebene Streckenlänge der vorausliegenden Fahrstrecke digitale Kartendaten zum Fahrbahnverlauf vorliegen, welche eine Positionsgenauigkeit aufweisen, die besser als ein vorgegebener Grenzwert G3 ist, wodurch sichergestellt ist, dass bei Verwendung von digitalen Kartendaten zur Berechnung einer Fahrzeugtrajektorie entlang der vorgegebenen vorausliegenden Fahrstrecke hinreichend genaues Kartenmaterial vorliegt, welches insbesondere auch ein digitales Abbild der Fahrspuren der vorausliegenden Fahrstrecke umfasst.

Weiter wird als Bedingung vorgeschlagen, dass für einen autonomen Betrieb des Fahrzeugs eine Verbindung zu einem Server bestehen muss, über die für die vorausliegende Fahrstrecke des Fahrzeugs aktuelle Verkehrsinformationen, vorzugsweise Informationen über lokale Gefahrenstellen wie zum Beispiel Baustellen, bereitstellbar sind.

Weiter wird als Bedingung vorgeschlagen, dass alle Systeme des Fahrzeugs, die zum autonomen Betreiben des Fahrzeugs erforderlich sind, fehlerfrei arbeiten müssen. Hierfür kann vorzugsweise eine standardisierte Abfrage über eine Steuereinheit erfolgen, die auch zur Ausführung eines Verfahrens zum autonomen Betreiben des Fahrzeugs ausgebildet ist.

Weiter wird als Bedingung vorgeschlagen, dass für die vorausliegende Fahrstrecke Wetterbedingungen vorgegebenen Wettermindestbedingungen entsprechen müssen. Hierbei ist es vorzugsweise sinnvoll, solche Wettermindestbedingungen vorzugeben, die einen störungsfreien Betrieb der für den autonomen Betrieb des Fahrzeugs notwendigen Assistenzsysteme, insbesondere solcher Systeme, die als optische Assistenzsysteme ausgebildet sind, garantieren.

Schließlich wird als Bedingung für einen autonomen Betrieb des Fahrzeugs vorgeschlagen, dass für die vorausliegende Fahrstrecke Oberflächenbedingungen vorliegen müssen, welche vorgegeben Oberflächenmindestbedingungen entsprechen. Auf diese Weise lässt sich sicherstellen, dass bei verminderten Oberflächenreibwerten µ_{low} oder sich plötzlich ändernden Oberflächenreibwerten µⱼᵤₘₚ, wie sie vorzugsweise im Herbst bzw. Winter auftreten, kein autonomer Betrieb des Fahrzeugs möglich ist.

In einer weiteren Ausführungsform des erfindungsgemäßen Assistenzsystems wird vorgeschlagen, dass das Assistenzsystem ein Ausgabemittel umfasst, welches derart ausgebildet und eingerichtet ist, dass über das Anzeigemittel einem Fahrer des Fahrzeugs eine Aktivierbarkeit des Assistenzsystems signalisierbar ist. Die Signalisierung erfolgt bevorzugt visuell, beispielweise durch Darstellung einer entsprechenden Meldung in einem Kombiinstrument und/oder in einem Zentraldisplay und/oder zusätzlich in einem Head-Up-Display, sowie akustisch, vorzugsweise durch Ausgabe eines entsprechenden Signaltons und/oder einer gesprochenen Wortmeldung.

Die Erfindung betrifft schließlich ein Fahrzeug, das ein vorstehend beschriebenes Assistenzsystem umfasst.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: eine Verkehrssituation mit einem Fahrzeug auf einer Fahrspur und einer vorausliegenden Fahrstrecke, und
- Fig. 2: ein erfindungsgemäßes Assistenzsystem zur Durchführung eines erfindungsgemäßen Verfahrens.

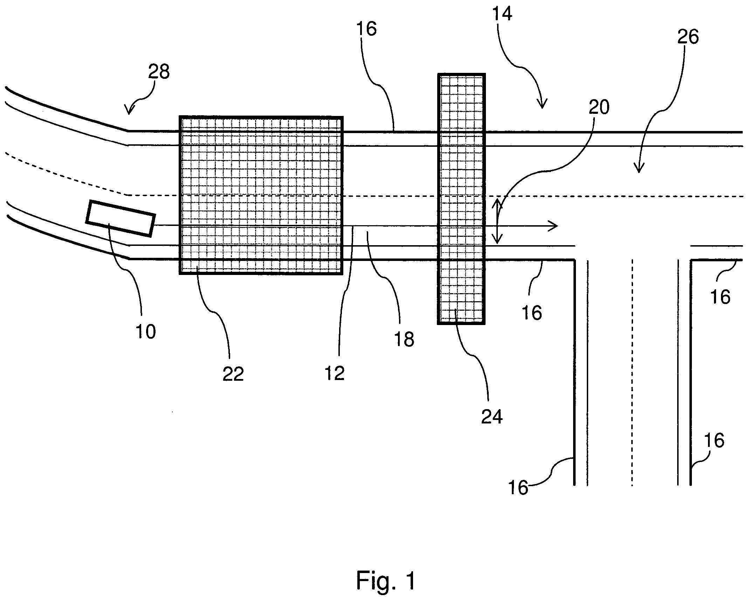

Fig. 1 zeigt eine Verkehrssituation mit einem Fahrzeug 10 auf einer Fahrbahn 14, die als Fahrbahn 14 mit zwei Fahrspuren 18 ausgebildet ist. Vor dem Fahrzeug 10 befindet sich eine vorausliegende Fahrstrecke 12, die durch das Fahrzeug 10 nur dann in einem autonomen Betrieb 46 zurücklegbar ist, wenn eine oder eine Gruppe der der nachfolgend beschriebenen Bedingungen, vorzugsweise alle Bedingungen erfüllt sind.
- Bedingung 1:: es muss zumindest auf einer Seite, vorzugsweise auf der Seite zur Fahrbahn des Gegenverkehrs, optional auch auf beiden Seiten, der aktuellen Fahrbahn 14 des Fahrzeugs 10 eine bauliche Trennung, beispielsweise in Form von Leitplanken oder Leitmauern 16 vorhanden sein,
- Bedingung 2:: die Fahrspur 18 des Fahrzeugs 10 muss eine vorgegebene Mindestspurbreite 20 aufweisen,
- Bedingung 3:: der Krümmungsradius 28 der Fahrstrecke 12 darf einen vorgegeben Grenzwert G1 nicht unterschreiten, wodurch vermieden werden soll, dass sich auf der vorausliegenden Fahrstrecke 10 zu enge Kurvenradien befinden, die einen autonomen Betrieb 46 des Fahrzeugs 10 gefährlich beeinträchtigen könnten,
- Bedingung 4:: die Reichweite von Umgebungserfassungssensoren, beispielsweise eines Radar- oder Kamerasystems, wird durch Kuppen oder Senken nicht wesentlich eingeschränkt, d.h. die Reichweite wird nicht auf einen Wert begrenzt, der kleiner als eine vorgegebene Mindestreichreichweite ist,
- Bedingung 5: die Anzahl der Fahrspuren 18 darf sich auf der voraus liegenden Fahrstrecke 12 nicht ändern,
- Bedingung 6:: es dürfen auf der Fahrstrecke 12 kein Tunnel 22 und kein Gebäude 24, wie beispielsweise eine Mautstelle, vorhanden sein,
- Bedingung 7:: es darf sich kein Autobahnkreuz 26 auf der vorausliegenden Fahrstrecke 12 des Fahrzeugs 10 befinden,
- Bedingung 8:: es dürfen keine Verkehrsstörungen, bspw. stockender Verkehr vorliegen,
- Bedingung 9:: es dürfen keine beispielsweise über einen externen Server abrufbaren Verkehrsmeldungen über Gefahrensituationen vorliegen,
- Bedingung 9:: es dürfen keine beispielsweise über einen externen Server abrufbaren Verkehrsmeldungen über das Vorhandensein von Baustellen vorliegen.

Die Bedingungen 5 bis 9 sind vorzugsweise optionale Bedingungen, d.h. sie werden vorzugsweise nur in Kombination mit mindestens einer der Bedingungen 1 bis 4 berücksichtigt.

In der in Fig.1 dargestellten Situation sind für die Fahrstrecke 12 lediglich die Bedingungen 2, 3, und 6 erfüllt, so dass kein autonomer Betrieb des Fahrzeugs 10 möglich ist.

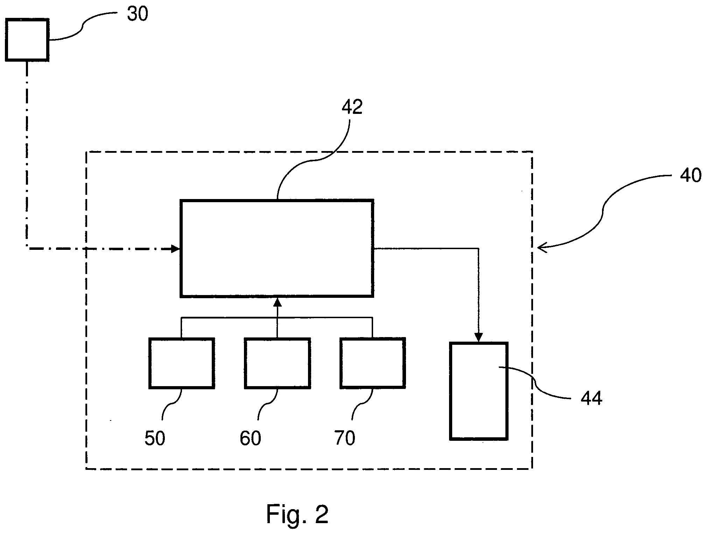

In Fig. 2 ist ein Assistenzsystem 40 zum autonomen Betreiben eines Fahrzeugs 10 dargestellt. Das Assistenzsystem 40 umfasst eine Steuereinheit 42, ein Ausgabemittel 44, ein Sensorsystem 50, eine Navigationsdatenbank 60, und ein Positionserfassungssystem 70 bspw. einen GPS-Empfänger. Die Steuereinheit 42 empfängt zudem Verkehrsinformationen und Wetterinformationen über ein mobiles Netzwerk von einem zentralen Server 30. Das Sensorsystem 50 tastet die Fahrzeugumgebung ab und ermittelte aktuelle Umgebungsinformationen, bspw. über das Vorhandensein von Leitplanken, über den Krümmungsradius der voraus liegenden Fahrstrecke, über die Zahl der Fahrspuren, über das Vorhandensein von Tunneln, Gebäuden und Autobahnkreuzen. Die Navigationsdatenbank 60 einhält eine digitale Straßenkarte mit zumindest einem Teil der vorstehend angeführten Informationen.

Die Steuereinheit 42 ist vorliegend derart ausgeführt und eingerichtet, dass ein autonomer Betrieb des Fahrzeugs nur dann freigeben wird, wenn zumindest eine oder alle oder eine Gruppe der nachfolgend beschriebenen Bedingungen erfüllt sind. Zunächst müssen auf einer der beiden Seiten der aktuellen Fahrbahn 14 des Fahrzeugs 10, vorzugsweise auf der Seite zur Fahrbahn des Gegenverkehrs, oder auf beiden Seiten eine bauliche Trennung 16 vorhanden sein, weiter muss die Fahrspur 18 des Fahrzeugs 10 eine Mindestbreite 20 aufweisen, zusätzlich darf sich die Anzahl der Fahrspuren 18 in der vorausliegenden Fahrstrecke 12 nicht ändern. Weiterhin dürfen auf der Fahrstrecke 12 kein Tunnel 22 und kein Gebäude 24, wie beispielsweise eine Mautstelle, vorhanden sein, zusätzlich darf sich kein Autobahnkreuz 26 auf der vorausliegenden Fahrstrecke 12 des Fahrzeugs 10 befinden. Schließlich darf ein Krümmungsradius 28 der Fahrstrecke 12 einen vorgegeben Grenzwert G1 nicht unterschreiten.

Obwohl die Erfindung im Detail durch bevorzugte Ausführungsbeispiele näher illustriert und erläutert worden ist, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert wird.

## Patentansprüche

1. Verfahren zum autonomen Betreiben eines Fahrzeugs (10) auf einer vorausliegenden Fahrstrecke (12), wobei der autonome Betrieb des Fahrzeugs (10) nur dann zugelassen wird, wenn für eine vorgegebene Streckenlänge der vorausliegenden Fahrstrecke (12) eine vorgegebene Bedingung oder eine Gruppe von vorgegebenen Bedingungen erfüllt ist bzw. sind,
**dadurch gekennzeichnet, dass**
die vorgegebene Bedingung oder die Gruppe der vorgegebenen Bedingungen mindestens eine der folgenden Bedingungen umfasst:
- auf zumindest einer Seite einer aktuellen Fahrbahn (14) des Fahrzeugs (10) ist eine bauliche Trennung (16) vorhanden,
- es sind keine die die Reichweite von Umgebungserfassungssensoren wesentlich einschränkenden Kuppen und Senken vorhanden,
- es ist kein Tunnel (22) vorhanden.

2. Verfahren nach Anspruch 1,
**dadurch gekennzeichnet, dass**
die vorgegebene Bedingung oder die Gruppe der vorgegebenen Bedingungen mindestens eine der folgenden Bedingungen umfasst:
- eine Fahrspur (18) des Fahrzeugs weist eine Mindestspurbreite (20) auf,
- ein Krümmungsradius (28) der Fahrspur (18) des Fahrzeugs (10) ist größer als ein vorgegebener Grenzwert,
- die Anzahl der Fahrspuren (18) ändert sich nicht,
- es ist kein Gebäude (24), wie beispielsweise eine Mautstelle, auf der Fahrbahn (14) vorhanden,
- es ist kein Autobahnkreuz (26) vorhanden,
- es liegt keine Verkehrsstörung vor,
- es liegt keine Verkehrsmeldung über Gefahrensituationen vor,
- es liegt keine Meldung über das Vorhandensein einer Baustelle vor.

3. Verfahren nach Anspruch 1 oder 2,
**dadurch gekennzeichnet, dass**
der autonome Betrieb des Fahrzeugs (10) nur dann zugelassen wird, wenn für eine vorgegebene Streckenlänge der vorausliegenden Fahrstrecke (12) eine oder eine Gruppe der folgenden Bedingungen erfüllt ist/sind:
- die aktuelle Position des Fahrzeugs (10) wird im Fahrzeug (10) mit einer Positionsgenauigkeit ermittelt, die besser als ein vorgegebener Grenzwert G2 ist,
- für die vorgegebene Streckenlänge der vorausliegenden Fahrstrecke (12) liegen digitale Kartendaten zum Fahrbahnverlauf vor, die eine Positionsgenauigkeit aufweisen, die besser als ein vorgegebener Grenzwert G3 ist,
- es besteht eine Verbindung zu einem Server (30), mittels dem aktuelle Verkehrsinformationen für die vorausliegende Fahrstrecke (12) bereitstellbar sind,
- alle Systeme des Fahrzeugs (10), die zum autonomen Betreiben erforderlich sind, arbeiten fehlerfrei,

4. Verfahren nach einem der Ansprüche 1 bis 3,
**dadurch gekennzeichnet, dass**
das Fahrzeug (10), sofern ein autonomer Betrieb (46) zulässig ist, eine Ausgabe erzeugt, die dies signalisiert.

5. Verfahren nach einem der Ansprüche 1 bis 4,
**dadurch gekennzeichnet, dass**
die vorgegebene Streckenlänge in einem Bereich von 1 km bis 20 km beträgt, insbesondere 2 km, 3 km, 4 km, 5 km, oder 10 km beträgt.

6. Verfahren nach einem der Ansprüche 3 bis 5,
**dadurch gekennzeichnet, dass**
die digitalen Kartendaten zwei Layer umfassen, wobei in einem der Layer Daten zu Spurverläufen der Fahrspuren (18) bereitgestellt werden, und im anderen Layer Daten zu Objekten bereitstellen, die entlang den Fahrspuren (18) angeordnet sind.

7. Assistenzsystem (40) zum autonomen Betreiben eines Fahrzeugs (10) auf einer vorausliegenden Fahrstrecke (12), wobei eine Steuereinheit (42) vorhanden ist, die den autonomen Betrieb des Fahrzeugs (10) nur dann zulässt, wenn für eine vorgegebene Streckenlänge der vorausliegenden Fahrstrecke (12) eine vorgegebene Bedingung oder eine Gruppe von vorgegebenen Bedingungen erfüllt ist bzw. sind:
**dadurch gekennzeichnet, dass**
die vorgegebene Bedingung oder die Gruppe von vorgegebenen Bedingungen mindesten eine der folgenden Bedingungen umfasst:
- auf mindestens einer Seite einer aktuellen Fahrbahn (14) des Fahrzeugs (10) ist eine bauliche Trennung (16) vorhanden,
- es sind keine die Reichweite von Umgebungserfassungssensoren wesentlich einschränkenden Kuppen und Senken vorhanden
- es ist kein Tunnel (22) vorhanden.

8. Assistenzsystem (40) nach Anspruch 7,
**dadurch gekennzeichnet, dass**
die vorgegebene Bedingung oder die Gruppe von vorgegebenen Bedingungen mindestens eine der folgenden Bedingungen umfasst:
- eine Fahrspur (18) des Fahrzeugs (10) weist eine Mindestspurbreite (20) auf,
- die Anzahl der Fahrspuren (18) ändert sich nicht,
- es ist kein Gebäude (24), wie beispielsweise eine Mautstelle, auf der Fahrbahn (14) vorhanden,
- es ist kein Autobahnkreuz (26) vorhanden,
- ein Krümmungsradius (28) der Fahrspur (18) des Fahrzeugs (10) ist größer als ein vorgegebener Grenzwert G1,
- es liegt keine Verkehrsstörung vor,
- es liegt keine Verkehrsmeldung über Gefahrensituationen vor
- es liegt keine Meldung über das Vorhandensein einer Baustelle vor.

9. Assistenzsystem (40) nach Anspruch 7 oder 8,
**dadurch gekennzeichnet, dass**
die Steuereinheit (42) den autonomen Betrieb des Fahrzeugs (10) nur dann zulässt, wenn für eine vorgegebene Streckenlänge der vorausliegenden Fahrstrecke (12) eine oder eine Gruppe der folgenden Bedingungen erfüllt ist/sind:
- die aktuelle Position des Fahrzeugs (10) wird im Fahrzeug (10) mit einer Positionsgenauigkeit ermittelt, die besser als ein vorgegebener Grenzwert G2 ist,
- für die vorgegebene Streckenlänge der vorausliegenden Fahrstrecke (12) liegen digitale Kartendaten zum Fahrbahnverlauf vor, die eine Positionsgenauigkeit aufweisen, die besser als ein vorgegebener Grenzwert G3 ist,
- es besteht eine Verbindung zu einem Server (30), mittels dem aktuelle Verkehrsinformationen für die vorausliegende Fahrstrecke (12) bereitstellbar sind,
- alle Systeme des Fahrzeugs (12), die zum autonomen Betreiben erforderlich sind, arbeiten fehlerfrei,
- die Wetterbedingungen für die vorausliegende Fahrstrecke (12) genügen vorgegebenen Wettermindestbedingungen,
- die Oberflächenbedingungen der Fahrbahn (14) der vorausliegenden Fahrstrecke (12) genügen vorgegebenen Oberflächenmindestbedingungen.

10. Fahrzeug (10) mit einem Assistenzsystem (40) nach einem der Ansprüche 6 bis 8.

## Claims

1. Method for the autonomous operation of a vehicle (10) on a route (12) ahead, wherein the autonomous operation of the vehicle (10) is authorised only if, for a predetermined route length of the route (12) ahead, a predetermined condition or a group of predetermined conditions is fulfilled,
**characterised in that**
the predetermined condition or the group of predetermined conditions comprises at least one of the following conditions:
- there is a structural separation (16) on at least one side of a current carriageway (14) of the vehicle,
- there are no crests or dips substantially restricting the range of environment detection devices,
- there is no tunnel (22).

2. Method according to claim 1,
**characterised in that**
the predetermined condition or the group of predetermined conditions comprises at least one of the following conditions:
- a lane (18) of the vehicle has a minimum lane width (20),
- a radius of curvature (28) of the lane (18) of the vehicle (10) is greater than a predetermined limit value,
- the number of lanes (18) does not change,
- there is no building (24), e.g. a toll plaza, on the carriageway (14),
- there is no motorway interchange (26),
- there is no traffic disruption,
- there is no traffic announcement about hazard situations,
- there is no announcement about the existence of road works.

3. Method according to claim 1 or 2,
**characterised in that**
the autonomous operation of the vehicle (10) is authorised only if, for a predetermined route length of the route (12) ahead, one or a group of the following conditions is fulfilled:
- the current position of the vehicle (10) is determined in the vehicle (10) with a positional accuracy that is better than a predetermined limit value G2,
- digital map data for the lane route with a positional accuracy that is better than a predetermined limit value G3 exist for the predetermined route length of the route (12) ahead,
- there is a connection to a server (30), by means of which current traffic information for the route (12) ahead can be provided,
- all systems of the vehicle (10) which are required for autonomous operation function faultlessly.

4. Method according to any of claims 1 to 3,
**characterised in that**
the vehicle (10) generates, if an autonomous operation (46) is authorised, an output signalling this.

5. Method according to any of claims 1 to 4,
**characterised in that**
the predetermined route length is in a range of 1 km to 20 km, being in particular 2 km, 3 km, 4 km, 5 km or 10 km.

6. Method according to any of claims 3 to 5,
**characterised in that**
the digital map data comprise two layers, wherein in one layer data on lane routes of the lanes (18) are provided and in the other layer data on objects located along the lanes (18) are provided.

7. Assistance system (40) for the autonomous operation of a vehicle (10) on a route (12) ahead, wherein a control unit (42) is provided which only authorises the autonomous operation of the vehicle (10) if, for a predetermined route length of the route (12) ahead, a predetermined condition or a group of predetermined conditions is fulfilled,
**characterised in that**
the predetermined condition or the group of predetermined conditions comprises at least one of the following conditions:
- there is a structural separation (16) on at least one side of a current carriageway (14) of the vehicle,
- there are no crests or dips substantially restricting the range of environment detection devices,
- there is no tunnel (22).

8. Assistance system (40) according to claim 7,
**characterised in that**
the predetermined condition or the group of predetermined conditions comprises at least one of the following conditions:
- a lane (18) of the vehicle has a minimum lane width (20),
- the number of lanes (18) does not change,
- there is no building (24), e.g. a toll plaza, on the carriageway (14),
- there is no motorway interchange (26),
- a radius of curvature (28) of the lane (18) of the vehicle (10) is greater than a predetermined limit value,
- there is no traffic disruption,
- there is no announcement about hazard situations,
- there is no announcement on the existence of road works.

9. Assistance system (40) according to claim 7 or 8,
**characterised in that**
the control unit (42) only authorises the autonomous operation of the vehicle (10) if, for a predetermined route length of the route (12) ahead, one or a group of the following conditions is fulfilled:
- the current position of the vehicle (10) is determined in the vehicle (10) with a positional accuracy that is better than a predetermined limit value G2,
- digital map data for the lane route with a positional accuracy that is better than a predetermined limit value G3 exist for the predetermined route length of the route (12) ahead,
- there is a connection to a server (30), by means of which current traffic information for the route (12) ahead can be provided,
- all systems of the vehicle (10) which are required for autonomous operation function faultlessly,
- the weather conditions for the route (12) ahead satisfy predetermined minimum weather conditions,
- the surface conditions of the carriageway (14) of the route (12) ahead satisfy predetermined minimum surface conditions.

10. Vehicle (10) with an assistance system (40) according to any of claims 6 to 8.

## Revendications

1. Procédé de fonctionnement d'un véhicule automobile autonome (10) sur un parcours à venir (12), le fonctionnement du véhicule automobile autonome (10) étant autorisé seulement si pour une longueur prédéfinie du parcours à venir (12) une condition prédéfinie ou un ensemble de conditions prédéfinies est rempli(s)
**caractérisé en ce que**
la condition prédéfinie ou l'ensemble de conditions prédéfinies comprend au moins l'une des conditions suivantes :
- une construction de séparation est présente sur au moins un côté d'une chaussée actuelle (14) du véhicule automobile,
- aucun dos d'âne ou aucune cuvette limitant sensiblement la portée des capteurs de détection d'environnement n'est présent(e),
- aucun tunnel (22) n'est présent.

2. Procédé selon la revendication 1,
**caractérisé en ce que**
la condition prédéfinie ou l'ensemble de conditions prédéfinies comprend au moins l'une des conditions suivantes :
- une voie de circulation (18) du véhicule automobile présente une largeur de voie minimum (20),
- un rayon de courbe (28) de la voie de circulation (18) du véhicule automobile (10) est supérieur à une valeur limite prédéfinie,
- le nombre de voies de circulation (18) ne change pas
- aucun bâtiment (24), comme par exemple un péage, n'est présent sur la chaussée (14),
- aucune intersection d'autoroutes (26) n'est présente,
- il n'y a pas de perturbation du trafic routier,
- il n'y a aucun message signalant des situations dangereuses,
- il n'y a aucun message indiquant la présence d'un chantier routier.

3. Procédé selon la revendication ou 2,
**caractérisé en ce que**
le fonctionnement du véhicule automobile autonome (10) est seulement autorisé si pour une longueur prédéfinie du parcours à venir (12) une condition ou un ensemble de conditions prédéfinie est rempli(e) :
- la position actuelle du véhicule automobile (10) est déterminée au moyen d'une précision de position dans le véhicule automobile (10) qui est meilleure qu'une valeur limite prédéfinie G2,
- il existe pour la longueur prédéfinie du parcours à venir (12) des données cartographiques numériques qui comprennent une précision de précision, qui est meilleure qu'une valeur limite prédéfinie G3,
- il existe une liaison avec un serveur (30) qui permet d'obtenir des informations relatives à la circulation routière actuelles pour le parcours à venir (12),
- tous les systèmes du véhicule automobile (10) qui sont nécessaires au fonctionnement autonome, fonctionnement correctement.

4. Procédé selon l'une quelconque des revendications 1 à 3,
**caractérisé en ce que**, dans la mesure où un fonctionnement autonome (46) est autorisé, le véhicule automobile (10) produit une sortie qui indique l'autorisation.

5. Procédé selon l'une quelconque des revendications 1 à 4,
**caractérisé en ce que** la longueur prédéfinie du parcours se situe dans une plage comprise entre 1 km et 20 km, en particulier 2 km, 3 km, 4 km, 5 km ou 10 km.

6. Procédé selon l'une quelconque des revendications 3 à 5,
**caractérisé en ce que**
les données cartographiques numériques comprennent deux couches, dans l'une des couches des données sont préparées pour le tracé de la voie des voies de circulation (18) et dans l'autre couche sont préparées des données concernant des objets qui sont disposés le long des voies de circulation (18).

7. Système d'aide à la conduite (40) pour le fonctionnement d'un véhicule automobile autonome (10) sur un parcours à venir (12), une unité de commande (42) servant à autoriser le fonctionnement du véhicule automobile autonome (10) seulement si pour une longueur prédéfinie du parcours à venir (12) est rempli(e) une condition prédéfinie ou un ensemble de conditions prédéfinies :
**caractérisé en ce que**
la condition prédéfinie ou l'ensemble de conditions prédéfinies comprend au moins l'une des conditions suivantes :
- une construction de séparation (16) est présente sur au moins un côté d'une chaussée actuelle (14) du véhicule automobile (10),
- il n'existe aucun dos d'âne ou aucune cuvette limitant sensiblement la portée des capteurs de détection d'environnement,
- il n'existe aucun tunnel (22).

8. Système d'aide à la conduite (40) selon la revendication 7,
**caractérisé en ce que**
la condition prédéfinie ou l'ensemble de conditions prédéfinies comprend au moins l'une des conditions suivantes :
- une voie de circulation (18) du véhicule automobile (10) présente une largeur de voie minimum (20),
- le nombre de voies de circulation (18) ne change pas,
- il n'existe aucun bâtiment (24), comme par exemple un péage, sur la chaussée (14),
- il n'existe aucune intersection d'autoroutes (26),
- un rayon de courbe (28) de la voie de circulation (18) du véhicule automobile (10) est supérieur à une valeur limite prédéfinie G1,
- le nombre de voies de circulation (18) ne change pas
- il n'y a pas de perturbation du trafic routier,
- il n'y a aucun message signalant des situations dangereuses,
- il n'y aucun message indiquant la présence d'un chantier routier.

9. Système d'aide à la conduite (40) selon la revendication 7 ou la revendication 8,
**caractérisé en ce que**
l'unité de commande (42) autorise le fonctionnement du véhicule automobile autonome (10) seulement si pour une longueur prédéfinie du parcours à venir (12) est rempli(e) une condition prédéfinie ou un ensemble de conditions prédéfinies :
- la position actuelle du véhicule automobile (10) est déterminée au moyen d'une précision de position dans le véhicule automobile (10) qui est meilleure qu'une valeur limite prédéfinie G2,
- il existe pour la longueur prédéfinie du parcours à venir (12) des données cartographiques numériques qui comportent une précision de position, qui est meilleure qu'une valeur limite prédéfinie G3,
- il existe une liaison avec un serveur (30) qui permet d'obtenir des informations relatives à la circulation routière actuelles pour le parcours à venir (12),
- tous les systèmes du véhicule automobile (12) qui sont nécessaires au fonctionnement autonome, fonctionnement correctement
- les conditions météorologiques pour le parcours prédéfini (12) satisfont aux conditions météorologiques minimum prédéfinies,
- les conditions de la surface de la chaussée (14) du parcours à venir (12) satisfont les conditions de surface minimum prédéfinies.

10. Véhicule (10) comprenant un système d'aide à la conduite (40) selon l'une quelconque des revendications 6 à 8.
